Europäisches Patentamt

(19) European Patent Office

Office européen des brevets

(11) Publication number : **0 056 193**
**B2**

(12) NEW EUROPEAN PATENT SPECIFICATION

(45) Date of publication of the new patent specification :
06.07.88

(51) Int. Cl.⁴ : **B 21 C 43/00**, B 21 C 23/01,
B 23 D 79/12

(21) Application number : 81306139.7

(22) Date of filing : 24.12.81

(54) Extrusion press with a billet scalper.

(30) Priority : 27.12.80 JP 191275/80 U
27.12.80 JP 191277/80 U

(43) Date of publication of application :
21.07.82 Bulletin 82/29

(45) Publication of the grant of the patent :
11.07.84 Bulletin 84/28

(45) Mention of the opposition decision :
06.07.88 Bulletin 88/27

(84) Designated contracting states :
CH DE FR GB LI

(56) References cited :
EP-A- 0 042 260
DD-A-    71 087
DE-A- 2 116 015
DE-A- 2 511 395
DE-A- 2 651 564
DE-C-   960 449
SU-A-   459 280
US-A- 2 688 400
US-A- 3 369 384
US-A- 3 577 759
US-A- 4 165 625

(73) Proprietor : KABUSHIKI KAISHA KOBE SEIKO SHO
3-18 1-chome, Wakinohama-cho Chuo-ku
Kobe 651 (JP)

(72) Inventor : Asari, Akira
16-15 Ohmiya 3-chome Asahi-ku
Osaka-shi (JP)
Inventor : Noyori, Tatsuhiko
4-11 Shinoharakitamachi 1-chome Nada-ku
Kobe-shi (JP)
Inventor : Tsuzuki, Hidehiro
6-13 Takakuradai 6-chome Suma-ku
Kobe-shi (JP)
Inventor : Tabuchi, Takahisa
3-2 Amagidori 7-chome Nada-ku
Kobe-shi (JP)
Inventor : Masuda, Tsuneharu
1-92, Akibadai 2-chome Tarumi-ku
Kobe-shi (JP)
Inventor : Takehata, Tetsuro
26, Kigawahigashi 4-chome
Yodogawa-ku Osaka-shi (JP)

(74) Representative : Wright, Hugh Ronald et al
Brookes & Martin 52/54 High Holborn
London WC1V 6SE (GB)

## Description

This invention relates to an extrusion press incorporating a billet scalper.

It is known in the art to employ, in an extrusion press, a billet scalper which is arranged to remove black skins and segregated alloy layers from the outer surfaces of cast billets by the use of a die assembly including a scalping die and a pressing member.

A billet scalper, comprising a die assembly mounted on a first frame and including a scalping die and a pressing apparatus supported on a second frame opposing said first frame and having a pressing stem movable toward and away from and in axial alignment with said scalping die for pressing a billet against said scalping die is known in the art, eg from SU-A-459 280.

The billet scalping operation must be used with indirect extrusion presses to obtain products of good quality by improving the flow of billets, and is useful with direct extrusion presses where especially high quality products are required such as in the case of aeronautical parts. Therefore, there have been proposed various scalpers which are intended to be used for either independent scalping operation or for integrating with an extrusion press.

Whether the billet scraper is an independent billet scalper or built into an extrusion press, there has been much recent concern as to how the chips can be handled without impairing the accuracy of the scalping. Thus chips which are diverse in shape and relatively bulky are difficult to handle and, if the chips are deposited on the scalping die, it becomes difficult to handle the succeeding billets, as well as to provide more efficient scalping and to speed-up the press cycle.

If a black skin or other foreign matter deposits on a scalping die, it is necessary to clean it off or to replace the die. In this connection, the conventional fixed type die assembly which is mounted on the axis of the machine makes die cleaning or replacing work difficult and requires hard labour from workers in situ.

According to the present invention, there is provided an extrusion press including a billet scalper, comprising a die assembly mounted on a first frame and including a scalping die ; a pressing apparatus supported on a second frame opposing said first frame and having a pressing stem movable toward and away from and in axial alignment with said scalping die for pressing a billet against said scalping die ; a chip ejector movably mounted around the circumference of said scalping die ; and drive means mounted on said first frame for axially moving said chip ejector toward said pressing apparatus beyond one end face of said scalping die to remove chips therefrom.

In one preferred form of the invention, the extrusion press includes a drive means for moving the die assembly including the scalping die perpendicularly to the axis of the scalper between a position on the axis of the scalper and an outer (withdrawn) position.

In another preferred form of the invention, the pressing mechanism has a hollow pressing stem with a head portion movable independently of the hollow stem portion and a piston and cylinder assembly located concentrically with the pressing stem for driving the head portion independently toward and away from the die assembly. This arrangement allows one to shorten the stroke length of the scalping cylinders and to provide a billet scalper of compact construction.

The above and other features and advantages of the present invention will become apparent from the following description and the appended claims, taken in conjunction with the accompanying drawings which illustrate by way of example preferred embodiments of the present invention.

In the accompanying drawings :

Figures 1 to 3 are sectional side elevations of a first billet scalper embodying the present invention, showing the scalper in different phases of its operation,

Figure 4 is a sectional view taken on line A-A of figure 2,

Figure 5 is a fragmentary sectional view showing essential component parts on an enlarged scale,

Figure 6 is a view similar to figure 4 but showing another embodiment of the present invention,

Figure 7 is a sectional side elevation of a third embodiment of the present invention,

Figure 8 is a fragmentary sectional view showing part of the embodiment of figure 7 on an enlarged scale,

Figure 9 is a partly sectional plan view of a modified billet scalper according to the present invention,

Figure 10(I) is a longitudinally sectioned side elevation of the billet scalper of figure 9,

Figure 10(II) is an elevation of a pressing drive mechanism of the modified billet scalper of figure 9,

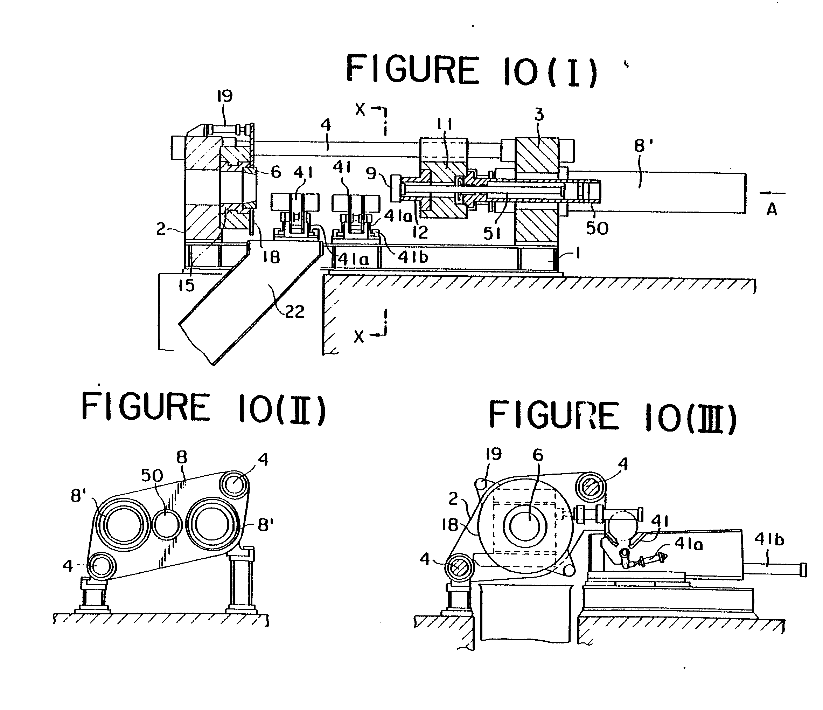

Figure 10(III) is a cross-section taken on line X-X of figure 10(I),

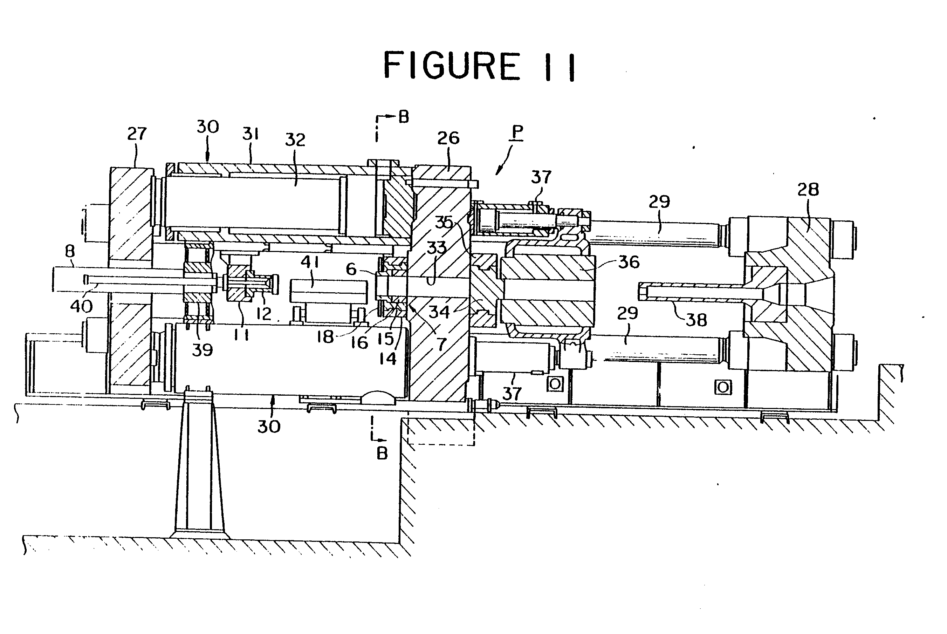

Figure 11 is a sectional side elevation of a pull-back type extrusion press incorporating a billet scalper of the present invention, and

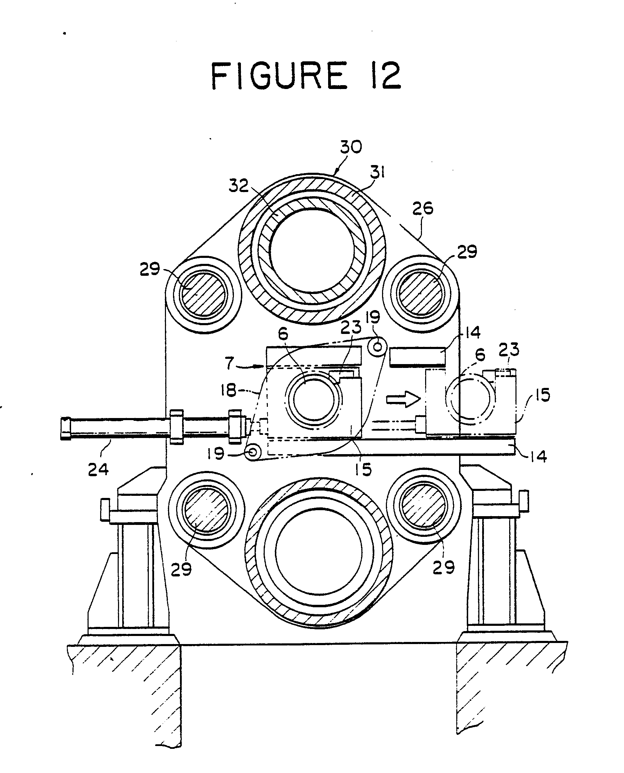

Figure 12 is a sectional view taken on line B-B of figure 11.

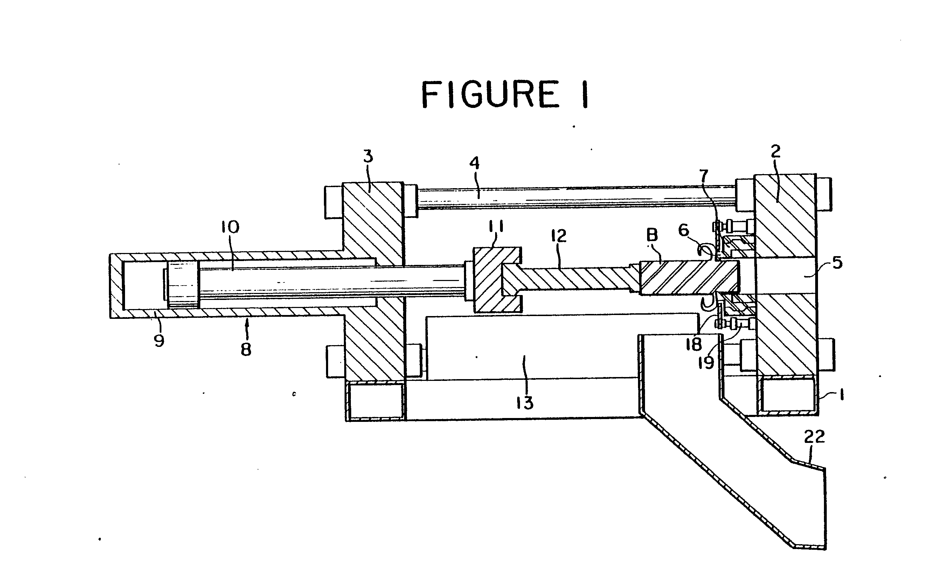

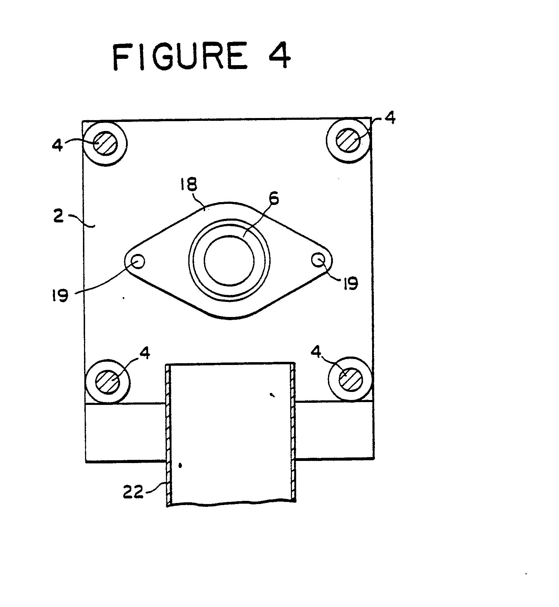

Referring to figures 1 to 5, there is shown a first embodiment of the present invention, the billet scalper having a body of Rahmen structure comprising opposing frames 2 and 3 which are mounted at the front and rear ends of a bed 1 and rigidly connected to each other by tie rods 4 at diagonal corners thereof.

The front frame 2 is provided with a through hole 5 at the scalping centre (i. e. on its axis), and a scalping die assembly 7 including a scalping die 6 is mounted on the rear side of the front frame 2, that is, on the side of the front frame 2 facing the rear frame 3.

A pressing mechanism 8 is is mounted on the other frame 3 in axial alignment with the scalping die 6, the pressing mechanism 8 including a scalping cylinder 9, a piston ram 10 fitted fluid-tight in the cylinder 9, and a pressing stem 12 mounted at the front end of the piston ram 10 through a crosshed 11. A billet B which is fed to a central position between the pressing stem 12 and the scalping die 6 is pressed against the scalping die 6 as the pressing mechanism 8 is caused to expand, and, after scalping, the pressing stem 12 is retracted to the original position by a contraction of the pressing mechanism 8. In this embodiment, the crosshead 11 is adapted to be guided by a pair of slide guide members 13 on the bed 1 in order to ensure accurate back and forth movements of the crosshead 11.

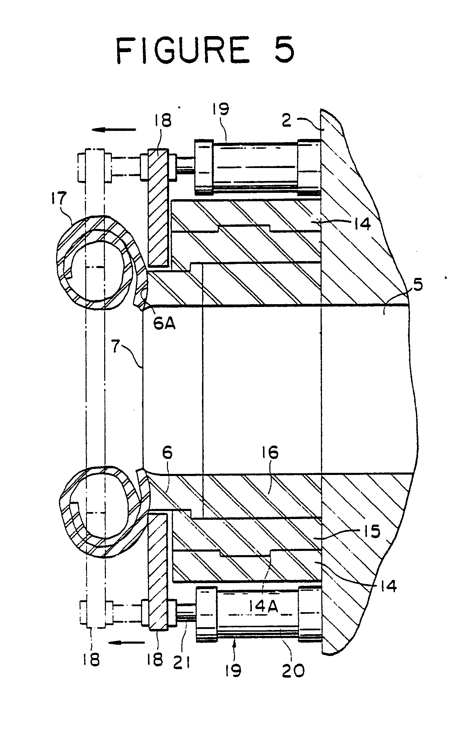

As shown particularly in figure 5, the die assembly 7 is provided with a pair of upper and lower die holder guides 14 which are mounted on the frame 2, a die holder 15 which is fitted in the die holder guides 14, and a scalping die 6 which is fitted in the die holder 15 through a die backer 16. The scalping die 6 is provided on its end face 6A with an arcuate guide surface for curling chips 17 into the so-called spiral form.

A chip ejector 18 which has its inner peripheral edge formed into an annular shape in this particular embodiment is fitted on the outer periphery of the scalping die 6. A pair of drive units 19 are mounted on the frame 2 for moving the chip ejector 18 axially toward and away from the pressing mechanism 8.

In this particular embodiment, each drive unit 19 consists of a cylinder 20 which is fixedly mounted on the frame 2 and a piston ram 21 which is fitted in a fluid-tight manner in the cylinder 20, with the front end of the piston ram 21 fixedly connected to the chip ejector 18. In figures 1 to 4, the reference numeral 22 indicates a chute for discharging the ejected chips out of the machine.

In operation of the above-described first embodiment, as a billet B is fed between the scalping die 6 and pressing stem 12 by a billet loader which is not shown, a fluid pressure (oil pressure) is applied to the pressing mechanism 8 to cause it to expand to press the billet B against the die 6 by the pressing stem 12, scalping the skin off the billet B along the entire length thereof as shown in figures 1 and 5. The chips which are curled into a spiral form under the guidance of the end face 6A of the die 6 sometimes remain on the end face 6A as shown in Figure 5.

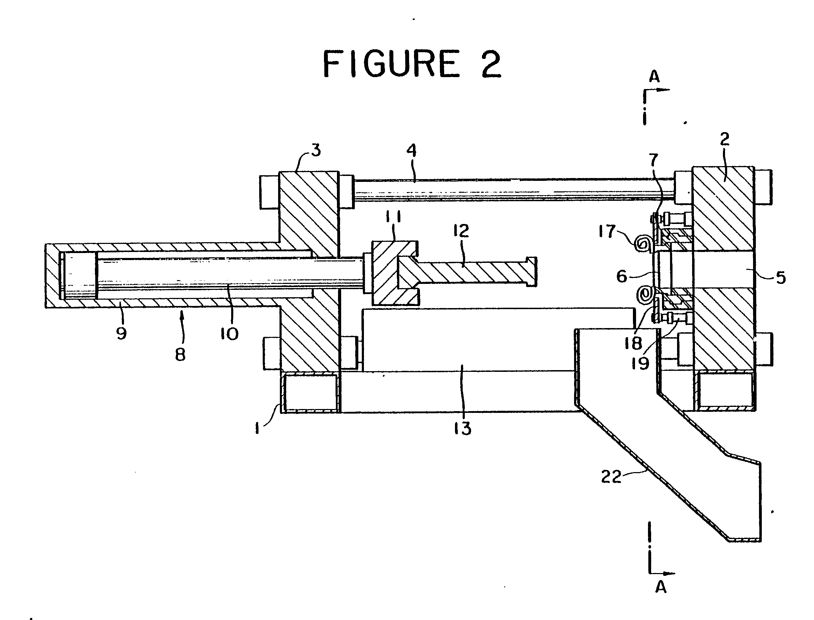

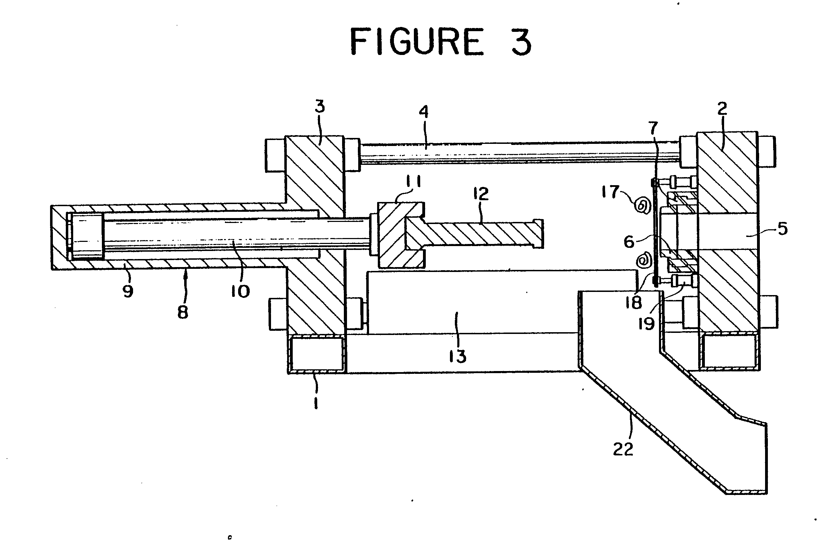

Therefore, after retracting the pressing stem 12 as shown in figure 2, the drive units 19 are extended in the present embodiment as indicated in phantom in figure 5, moving the chip ejector 18 axially beyond the end face 6A of the scalping die 6. As a result, the chips 17 are removed from the end face 6A discharged out of the machine through the chute 22 as shown in figure 3. In the meantime, the chip ejector 18 is retracted to its original position by contraction of the drive units 19 until the chip ejection in the next cycle of operation.

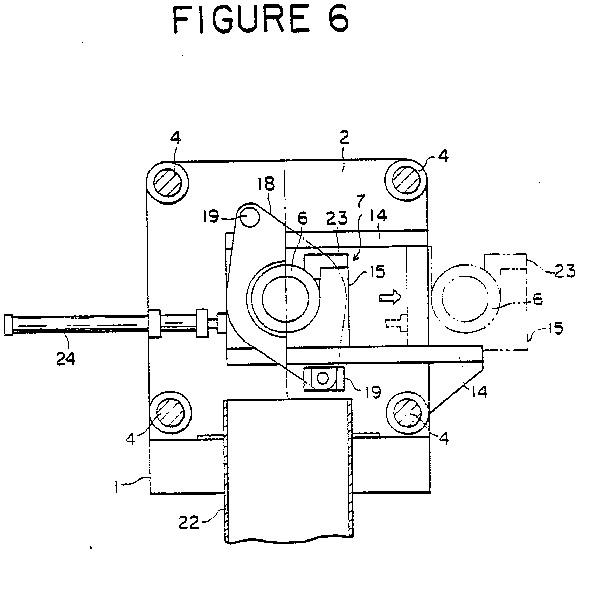

Figure 6 illustrates a second embodiment of the present invention, where those component parts which have correspondents in the first embodiments are designated by corresponding reference numerals.

As seen in figure 6, a die holder 15 of U-shape supports a scalping die 6 through a die retainer 23, and there are provided die holder guides 14 having slide guide surfaces which extend perpendicular to the axis of the press to allow movement of the die 6 and die holder 15 along the guide surfaces between a position at the scalping centre (on the axis of the scalper) and an outer withdrawn position. In this particular embodiment, telescopic piston cylinders limits are employed as the drive units 24.

Therefore, in the second embodiment, the die 6 and die holder 15 are movable to a position away from the chip ejector 18 which is left at the scalping centre, as indicated in phantom in figure 6. This permits easy access to the die assembly for simple and accurate handling of the die 6 during cleaning, replacement or other operations while retaining the advantages of the first embodiment.

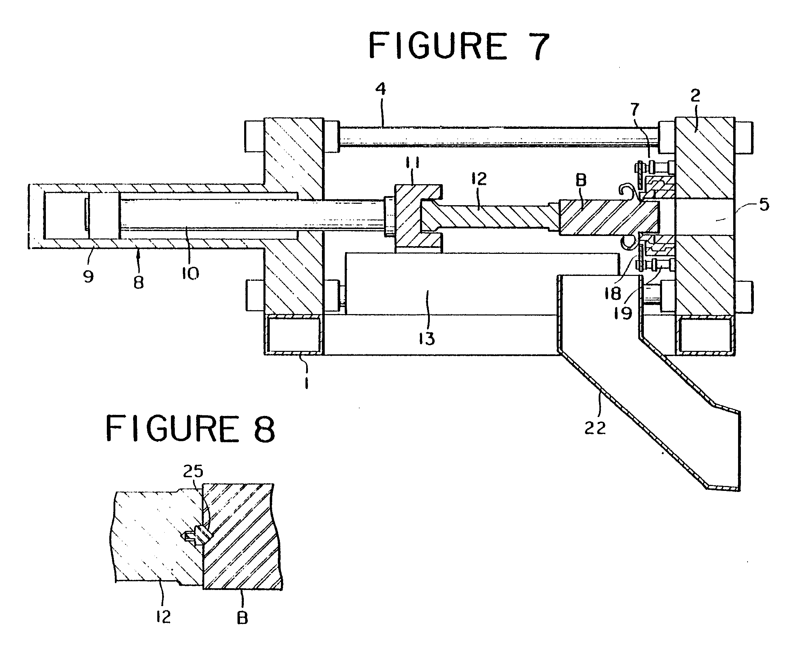

Figures 7 and 8 depict a third embodiment (with an additional componnet), in which a sharp-pointed projection 25 is attached to the end face of the pressing stem 12 of the first and second embodiments. In the particular example shown, the projection 25 is detachably secured to the pressing stem 12 by means of a screw thread.

In the scalping operation by the third embodiment, the sharp-pointed projection 25 holds the billet B in axial alignment with the pressing stem 12 and shaving die 6 to ensure that the scalping operation is effected uniformly and accurately over the entire length of the billet B.

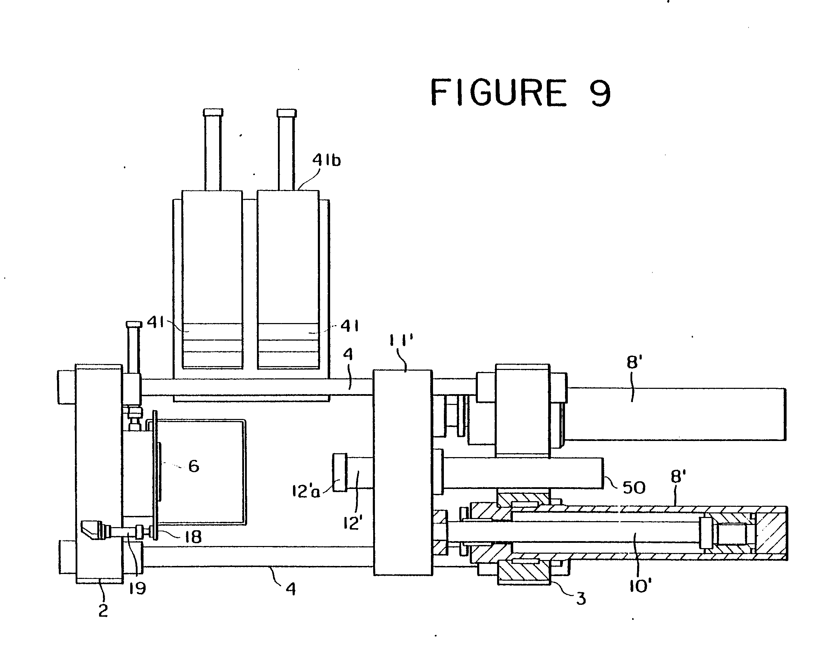

Referring to figures 9 and 10(I) to 10(III), there is shown a further embodiment of the present invention, which includes a billet advancing cylinder to shorten the stroke of the scalping cylinder or cylinders. Similarly to the previous embodiments, a cylinder frame 3 and a platen 2 are opposingly mounted on a bed 1 and connected with each other by the rods 4. Mounted on the cylinder frame 3 are scalping cylinders 8' which mount on the respective piston rods 10' a crosshead 11' with a hollow pressing stem 12' projected from the centre thereof. Mounted concentrically with the pressing stem 12' is a billet advancing cylinder 50, the piston rod 51 of which extends through the stem 12' and is connected to a stem head 12' a located separably at the front end of the stem 12'. Billet loaders 41 are located on one side of the scalper between the platen 2 and cylinder frame 3 for feeding billets one after another to the scalping centre. Similarly to the previous embodiments, an axially reciprocable chip ejector 18 is provided around a scalping die 6 for ejecting the chips resulting from the scalping operation, the scalping die 6 being mounted on the platen 2 through a die holder 15. Indicated at 41a is a mechanism for opening and closing the billet loader 41, at 41b a mechanism for moving the billet loader 41 toward and away from the scalping centre, at 19 a mechanism for axially reciprocating the chip ejector 18, and at 22 a drive chip discharging chute. These mechanisms for controlling the movements and operations of the billet loader 46 and chip ejector 18 may be of conventional construction.

Figures 11 and 12 show the billet scalper of the present invention incorporated in a pull-back type extrusion press P, including a fixed platen 26, and movable platens 27, 28 which are positioned on opposite sides of the fixed platen 26 and rigidly connected with each other by diagonally disposed tie rods 29.

Interposed between the fixed and movable platens 26 and 27 are a pair of upper and lower press power generators 30 which consists of a main cylinder 31 mounted on the fixed platen 26 and a main ram 32 fitted in fluid-tight manner in the main cylinder 31.

The fixed platen 26 is provided with a through hole 33 at the press centre (i. e. on the axis of the press). Provided forwardly (as seen in the pressing direction) on the through hole 33 is a closure block 34 which is slidable between a position at the press centre and an outer withdrawn position perpendicularly spaced from the axis of the press. The block 34 is slid between these two positions along guides 35 by operation of a piston and cylinder, not shown, for opening and closing the through hole 33.

Provided between the fixed and movable platens 26 and 28 are a container 36 and piston and cylinder units 37 for clamping the container 36. A die stem 38 is mounted on the movable platen 28 at the press centre.

Further, a scalping die assembly of the type shown in figure 6 is mounted on the rear side of the fixed platen 26, and a scalping frame 39 is provided in the main cylinders 31 to support thereon a billet pressing mechanism 8 with a pressing stem 12, and a billet advancing cylinder 40. The construction of the die assembly 7 is the same as in the first to third embodiments so that the same parts are designated by the same reference numerals. In figure 9, the reference number 41 denotes a billet loader.

In the embodiment shown in figures 11 and 12, a billet is charged (i. e. loaded) between the pressing stem 12 and scalping die 6 by the billet loader 41 and then scalped axially over its entire length by cooperation of the pressing stem 12 and scalping die 6. The scalped billet remains in the through hole 33, while the chips 17 resulting from the scalping operation are removed from the end face of the die 6 moving the chip ejector 18 in the pressing direction by extension of the drive units 19.

The replacement or cleaning or other maintenance and service of the die 6 can be carried out easily outside the machine as shown in phantom in figure 12 by extending the drive units 24.

In the meantime, the scalped billet is charged (loaded) into the container 36 by operation of the billet advancing cylinder 40 and the rear opening of the container 36 is closed by the closure block 34. After clamping the container 36 in position by the clamping cylinders 37, pressure medium is supplied to the press power generator 30, moving the movable platens 27 and 28 to the left in the example shown in figure 9 to extrude the billet (rightward in the same figure) through the die stem 38.

In the embodiment shown in figure 11, the billet scalper is built into an extrusion press so that the scalping operation can be performed in relation to the extrusion press cycle in such a manner as to shorten the time of the press cycle, as well as providing the advantage that some component parts of the extrusion press can be used in the scalping operation.

It will be appreciated from the above description that the billet scalper can remove the chips 17 from the scalping die in a reliable and simple manner by means of the chip ejector 18. Since the chip ejector 18 is axially reciprocable, it can remove the chips reliably without interfering with the scalping operation.

Further, in the embodiment in which the die assembly 7 including the scalping die 6 is movable between a position at the centre of the scalper and an outer withdrawn position, the replacement and cleaning of the die can be carried out quickly and safely with much less labour. In the case of the embodiment with a projection 25 on the end face of the presser stem 12, the billet is held in the correct position free of fluttering during the scalping operation to permit uniform scalping using reduced power. Moreover, it is possible to shorten the press cycle while attaining the aforementioned objects, by providing the scalper and the die assembly 7 as part of an extrusion press P.

Claims

1. An extrusion press including a billet scalper, comprising a die assembly (7) mounted on a first frame (2, 26) and including a scalping die (6) ; a pressing apparatus (8) supported on a second frame (3, 27) opposing said first frame (2, 26) and having a pressing stem (12) movable toward and away from and in axial alignment with said scalping die (6) for pressing a billet (B) against said scalping die (6) ; a chip ejector (18) movably mounted around the circumference of said scalping die (6) ; and drive means (19) mounted on said first frame (2, 26) for axially moving said chip ejector (18) toward said pressing apparatus (8) beyond one end face of said scalping die to remove the chips (17) therefrom.

2. An extrusion press as claimed in claim 1, further comprising drive means (24) for moving said die assembly (7) including said scalping die (6) perpendicularly to the axis of the scalper between a position on the axis of said scalper and an outer position.

3. An extrusion press as claimed in claim 1 or 2, further comprising a sharp-pointed projection (25) provided at the front end face of said pressing stem (12).

4. An extrusion press as claimed in claim 1, wherein said press is a pull-back type extrusion press (P) having a fixed centre platen (26) and front and rear movable platens (28, 27) located on the front and rear sides of said fixed platen (26) and connected to each other by tie rods (29) and a press power generator (30), said die assembly (7) including said scalping die (6) being mounted on said fixed centre platen (26) movably perpendicularly to the axis of said press between a position on the axis of said press and an outer position.

5. An extrusion press as claimed in claim 1, wherein said pressing stem has a hollow body portion (12') and a head portion (12'a) movable independently of said hollow body portion, and said pressing mechanism (8) is provided with a piston and cylinder assembly (50) for driving said head portion (12'a) of said pressing stem (12) independently toward and away from said die assembly (7).

**Patentansprüche**

1. Strangpresse mit einer Vorrichtung zum Schälen von Knüppeln, mit einer auf einem ersten Rahmen (2, 26) angeordneten, eine Schälmatrize (6) aufweisenden Matrizenanordnung (7) ; einer auf einem dem ersten Rahmen (2, 26) gegenüberliegenden zweiten Ramen (3, 27) abgestützten Preßvorrichtung, die einen Preßstempel (12) aufweist, der koaxial auf die Schälmatrize (6) zu und von dieser weg bewegt werden kann, um einen Knüppel (B) gegen die Schälmatrize (6) zu pressen ; einem um den Umfang der Schälmatrize (6) bewegbar gelagerten Spanauswerfer (18) ; und einem auf dem ersten Rahmen (2, 26) angeordneten Antrieb (19) zum axialen Bewegen des Spanauswerfers (18) gegen die Preßvorrichtung (8) hinter eine Stirnseite der Schälmatrize, um Späne (17) von dieser zu entfernen.

2. Strangpresse nach Anspruch 1, dadurch gekennzeichnet, daß sie einen Antrieb (24) zum Bewegen der die Schälmatrize (6) aufweisenden Matrizenanordnung (7) senkrecht zur Achse der Schälvorrichtung zwischen einer Position auf dieser Achse und einer äußeren Position aufweist.

3. Strangpresse nach Anspruch 1 oder 2, dadurch gekennzeichnet, daß sie an der vorderen Stirnseite des Preßstempels (12) einen spitzen Vorsprung (25) aufweist.

4. Strangpresse nach Anspruch 1, dadurch gekennzeichnet, daß sie eine Rückzieh-Strangpresse (P) ist, welche eine feststehende mittlere Platte (26) und auf der Vorderseite und der Rückseite dieser feststehenden Platte (26) angeordnete vordere und hintere bewegbare Platten (28, 27), welche mittels Zugstangen (29) miteinander verbunden sind, und einen Preßkraft-Generator (30) aufweist, wobei die die Schälmatrize (6) aufweisende Matrizenanordnung (7) auf der mittleren Platte (26) senkrecht zur Achse der Strangpresse zwischen einer Position auf dieser Achse und einer äußeren Position bewegbar befestigt ist.

5. Strangpresse nach Anspruch 1, dadurch gekennzeichnet, daß der Preßstempel ein hohles Körperstück (12') und ein unabhängig von dem hohlen Körperstück bewegbares Kopfstück (12'a) aufweist und daß der Preßmechanismus (8) mit einer Kolben-Zylinder-Anordnung (50) zum unabhängigen Antreiben des Kopfstückes (12'a) des Preßstempels (12) gegen die Matrizenanordnung (7) und von dieser weg versehen ist.

**Revendications**

1. Une presse d'extrusion comportant un dispositif pour écroûter des lingots, comprenant un montage de matrice (7) monté sur un premier bâti (2, 26) et comportant une matrice d'écroûtage (6) ; un mécanisme presseur (8) supporté sur un second bâti (3, 27) opposé audit premier bâti (2, 26) et ayant une tige presseuse (12) pouvant se rapprocher et s'écarter de ladite matrice d'écroûtage (6) dans l'axe de celle-ci pour presser un lingot (B) contre ladite matrice d'écroûtage (6) ; un éjecteur de copeaux (18) monté mobile autour du pourtour de ladite matrice d'écroûtage (6) ; et un moyen d'entraînement (19) monté sur ledit premier bâti (2, 26) pour déplacer axialement ledit éjecteur de copeaux (18) vers ledit mécanisme presseur (8) au-delà d'une face terminale de ladite matrice d'écroûtage pour en éliminer les copeaux (17).

2. Une presse d'extrusion selon la revendication 1, caractérisée en ce qu'elle comporte en outre un moyen d'entraînement (24) pour déplacer ledit montage de matrice (7) comportant ladite matrice d'écroûtage (6) perpendiculairement à l'axe du dispositif à écroûter entre une position située sur l'axe dudit dispositif d'écroûtage et une position extérieure.

3. Une presse d'extrusion selon la revendication 1 ou 2, caractérisée en ce qu'elle comporte en outre un saillant à pointe aiguë (25) prévu sur la face terminale avant de ladite tige presseuse (12).

4. Une presse d'extrusion selon la revendication 1, ladite presse étant une presse d'extrusion (P) à effet de rappel ayant un plateau médian fixe (26) et des plateaux mobiles avant et arrière (28, 27) situés du côté avant et du côté arrière dudit plateau fixe (26) et reliés l'un à l'autre par des tiges de liaison (29) et un générateur d'énergie de presse (30), ledit montage de matrice (78) comportant ladite matrice d'écroûtage (16) montée sur ledit plateau médian fixe (26) avec liberté de mouvement perpendiculairement à l'axe de ladite presse entre une position située sur l'axe de ladite presse et une position extérieure.

5. Une presse d'extrusion selon la revendication 1, caractérisée en ce que ladite tige presseuse a une partie de corps creux (12') et une partie de tête (12'a) mobile indépendamment de ladite partie de corps creux, et ledit mécanisme presseur (8) est muni d'un vérin (50) pour entraîner indépendamment ladite partie de tête (12'a) de ladite tige presseuse (12) en direction et à l'opposé dudit montage de matrice (7).

# FIGURE I

0 056 193

FIGURE 2

# FIGURE 3

# FIGURE 4

# FIGURE 5

# FIGURE 6

# FIGURE 7

# FIGURE 8

FIGURE 9

FIGURE 10(I)

FIGURE 10(II)

FIGURE 10(III)

FIGURE 11

# FIGURE 12